# EUROPÄISCHE PATENTSCHRIFT

(11) **EP 1 708 976 B1**
(45) Veröffentlichungstag und Bekanntmachung des Hinweises auf die Patenterteilung: **20.04.2011**
(21) Anmeldenummer: 05706843.9
(22) Anmeldetag: 07.01.2005
(51) Int. Cl.: C07B 63/00, C07D 233/58

(54) **DESTILLATION VON IONISCHEN FLÜSSIGKEITEN**
DISTILLATION OF IONIC LIQUIDS
DISTILLATION DE LIQUIDES IONIQUES

(30) Priorität: 16.01.2004 DE 102004002420
(43) Veröffentlichungstag der Anmeldung: 11.10.2006
(73) Patentinhaber: BASF SE, 67056 Ludwigshafen (DE)
(72) Erfinder: MAASE, Matthias, 67346 Speyer (DE)
(86) Internationale Anmeldenummer: PCT/EP2005/000084
(87) Internationale Veröffentlichungsnummer: WO 2005/068404

(56) Entgegenhaltungen:
- WO-A-2005/019183
- LUIS P.N. REBELO ET AL.: "On the critical temperature, normal boiling point, and vapor pressure of ionic liquids" THE JOURNAL OF PHYSICAL CHEMISTRY B, Bd. 109, 12. März 2005 (2005-03-12), Seiten 6040-6043, XP002332771
- J.H. DAVIS ET AL.: "Ionic Liquids in Synthesis" [Online] 2002, WILEY-VCH VERLAG GMBH & CO. KGAA , XP002332772 ISBN: 3-527-60070-1 Gefunden im Internet: URL:http://www3.interscience.wiley.com/cgi -bin/booktext/102529605/BOOKPDFSTART> Seite 7 - Seite 40

## Beschreibung

Die vorliegende Erfindung beschreibt ein Verfahren und seine Verwendung zur Destillation von ionischen Flüssigkeiten.

Ionische Flüssigkeiten gewinnen als Lösungsmittel, z.B. bei Durchführung chemischer Reaktionen zunehmend an Bedeutung. Peter Wasserscheidt, Chemie in unserer Zeit 37 (2003) Nr. 1, Seiten 52-63 gibt einen Überblick über den Einsatz ionischer Flüssigkeiten zur Mehrphasenkatalyse. Dabei wird als ein Vorteil von ionischen Flüssigkeiten beim Einsatz als Lösungsmittel genannt, dass aufgrund des nicht messbaren niedrigen Dampfdruckes der ionischen Flüssigkeit kein Lösungsmittel verdampft.

Bei der Verwendung ionischer Flüssigkeiten zur Durchführung chemischer Reaktionen ist dabei die Reinheit der eingesetzten ionischen Flüssigkeit von großer Bedeutung. Verunreinigungen können z.B. den Verlauf der chemischen Reaktionen im Allgemeinen negativ beeinflussen. So wird z.B. durch P. Tyson et al. in Electrochemical Society Proceedings, vol. 99-41, Seite 161-168 auf Probleme beim Einsatz von chloridhaltigen ionischen Flüssigkeiten in der Flüssigphasenhydrierung und bei der Suzuki-Reaktion hingewiesen. Daher sind bei der Herstellung ionischer Flüssigkeiten hohe Anforderungen an die Reinheit der gewünschten Flüssigkeit zu stellen.

Ionische Flüssigkeiten im Sinne dieser Erfindung sind Salze, die bereits bei niedrigen Temperaturen, vorzugsweise unterhalb von 100 °C, in flüssigem Aggregatszustand vorliegen.

*Ein Verfahren, bei dem ein 1,3-substituiertes Imidazoliumsalz mit einer starken Base zum entsprechenden 1,3-substituierten Imidazol-2-yliden umgesetzt wird und das 1,3-substituierte Imidazol-2-yliden abdestilliert und anschließend mit einer Protonensäure in Kontakt gebracht wird, ist aus* WO-A 2005/019183 *bekannt.*

Aufgabe der vorliegenden Erfindung ist es, ein technisch einsetzbares Verfahren zur Reinigung von ionischen Flüssigkeiten zu entwickeln.

Es hat sich gezeigt, dass in einer ionischen Flüssigkeit Kationen, Anionen und neutrale Moleküle, die z. B. durch Protonierung bzw. Alkylierung der Anionen durch die Kationen entstehen, im Gleichgewicht vorliegen.

Bei der Alkylierung geht wahrscheinlich ein positiv geladener Alkylrest, der bevorzugt an ein Heteroatom des Kations gebunden ist, auf das Anion über. Heteroatome sind zum Beispiel Stickstoff, Sauerstoff, Phosphor oder Schwefel. Geeignete Alkyle hierbei sind C₁ bis C₁₈ -Alkyle, bevorzugte Alkyle sind C₁ bis C₁₀-Alkyle, besonders bevorzugt C₁ bis C₆-Alkyle und ganz besonders bevorzugt ist als positiv geladener Alkylrest CH₃⁺. Im Unterschied dazu geht bei der Protonierung ein Proton von einem Heteroatom des Kations auf das Anion über.

Die Lösung der gestellten Aufgabe ist ein Verfahren zur Destillation ionischer Flüssigkeiten, bei welchem in einem ersten Schritt ein Druck gleich dem Umgebungsdruck oder unterhalb des Umgebungsdruckes eingestellt wird und in einem zweiten Schritt die ionische Flüssigkeit auf eine Temperatur im Bereich von 60°C bis 350°C erwärmt wird.

In einer bevorzugten Ausführungsvariante liegen in der ionischen Flüssigkeit Kationen, Anionen und neutrale Moleküle, die insbesondere durch Protonierung bzw. Alkylierung der Anionen durch die Kationen entstehen, im Gleichgewicht vor.

In einer weiteren bevorzugten Verfahrensvariante wird bei der Destillation zumindest das leichter flüchtige der neutralen Moleküle abdestilliert.

Obwohl ionische Flüssigkeiten keinen messbaren Dampfdruck besitzen, hat sich gezeigt, dass sie sich bei Drücken < 1 bar, bevorzugt bei Drücken < 200 mbar, mehr bevorzugt bei Drücken < 50 mbar und ganz besonders bevorzugt bei Drücken < 5 mbar und bei Sumpftemperaturen im Bereich von 60 °C bis 350 °C, bevorzugt im Bereich von 100 °C bis 350 °C und insbesondere im Bereich von 150 °C bis 350 °C destillieren lassen.

In einer bevorzugten Ausführungsform wird durch das Abtrennen des leichter flüchtigen der neutralen Moleküle dieses gezielt zurückgewonnen. Das so zurückgewonnene Molekül kann z.B. später erneut zur Herstellung einer gleichartigen oder andersartigen ionischen Flüssigkeit eingesetzt werden.

In einer besonders bevorzugten Ausführungsform werden beide neutralen Moleküle der ionischen Flüssigkeit abdestilliert und später in einer Vorlage wieder zur gleichen ionischen Flüssigkeit rekombiniert. Durch diese selektive Abtrennung der neutralen Moleküle der ionischen Flüssigkeit und deren Rekombination in der Vorlage nach der Kondensation wird eine ionische Flüssigkeit in hoher Reinheit gewonnen.

Ionische Flüssigkeiten im Sinne der vorliegenden Erfindung sind Salze der allgemeinen Formel

[A]n⁺ [Y]ⁿ⁻

wobei n = 1, 2, 3 oder 4 ist.

Verbindungen, die sich zur Bildung des Kations [A]ₙ⁺ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Bevorzugt sind solche Verbindungen, die mindestens einen fünf- bis sechsgliedrigen Heterocyclus enthalten, der mindestens ein Stickstoffatom sowie gegebenenfalls ein Sauerstoff- oder Schwefelatom aufweist, besonders bevorzugt solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen.

Besonders bevorzugte Verbindungen sind solche, die ein Molgewicht unter 1000 g/mol aufweisen, ganz besonders bevorzugt unter 500 g/mol und insbesondere unter 250 g/mol.

Weiterhin sind solche Verbindungen zur Bildung des Kations bevorzugt, die ausgewählt sind aus den Verbindungen der Formeln (la) bis (Ir), 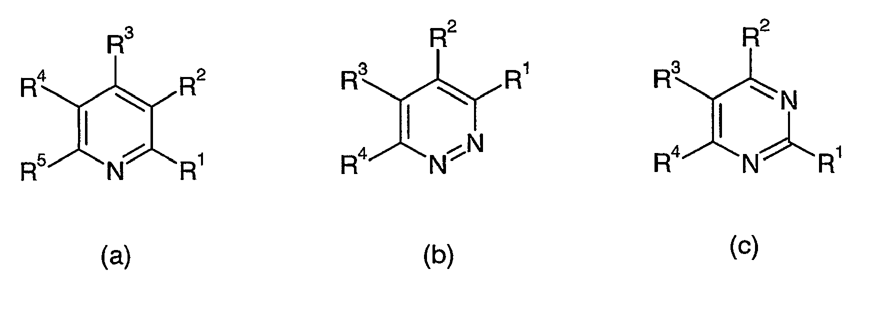 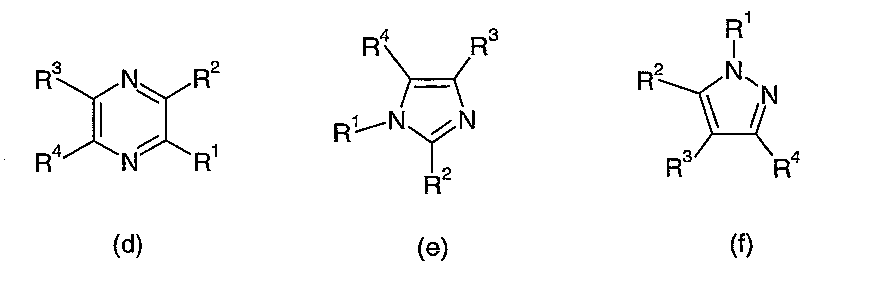 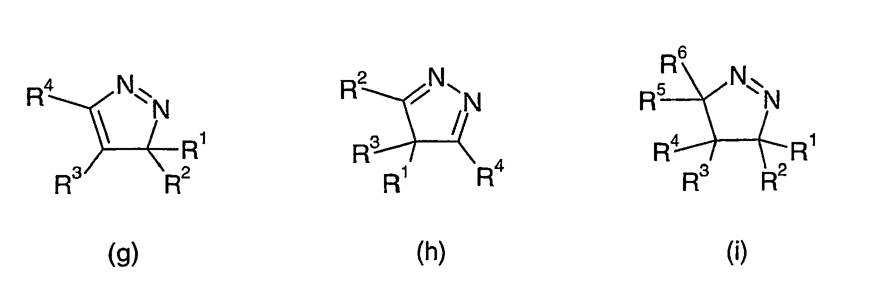 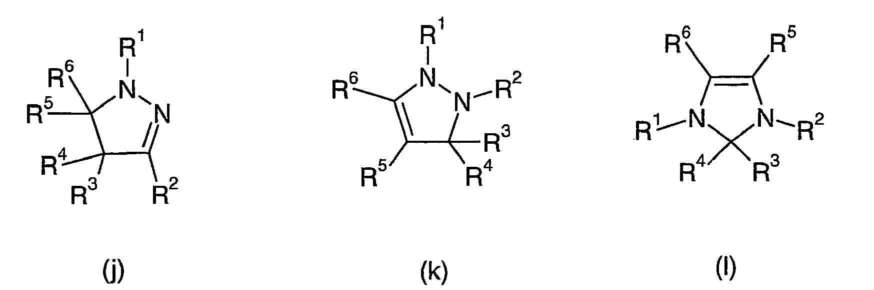 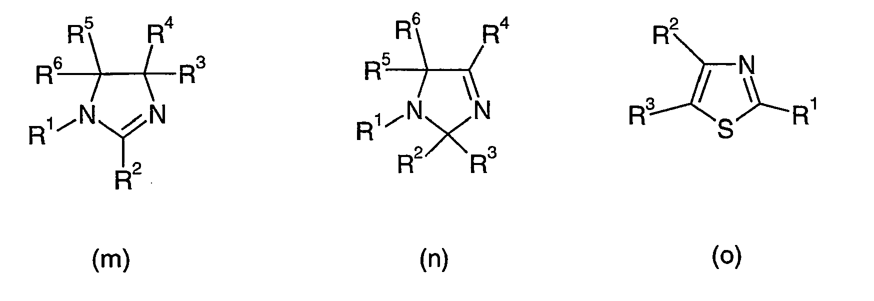 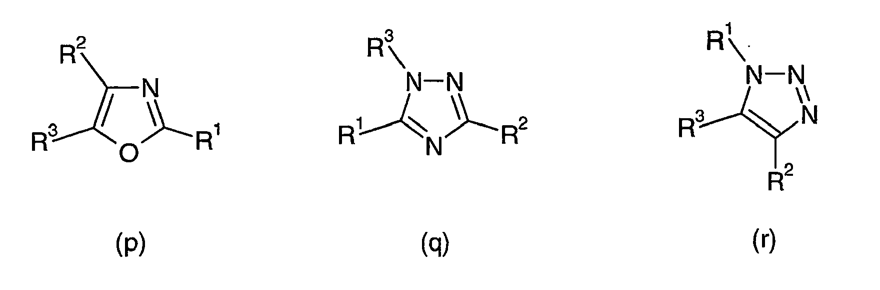 sowie Oligo- bzw. Polymere, die diese Strukturen enthalten, worin die Substituenten und Indices folgende Bedeutung haben:
R¹, R², R³, R⁴, R⁵ und R⁶ unabhängig voneinander jeweils Wasserstoff, C₁-C₁₈-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl oder einen fünfbis sechsgliedrigen, Sauerstoff-, Stickstoff- und/oder Schwefelatome aufweisenden Heterocyclus, oder zwei von ihnen gemeinsam einen ungesättigten, gesättigten oder aromatischen und gegebenenfalls durch ein oder mehrere nicht-benachbarte Sauerstoff- und/oder Schwefelatome und/oder ein oder mehrere substituierte oder unsubstituierte Iminogruppen unterbrochenen Ring bilden, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin bedeutet gegebenenfalls durch funktionelle Gruppen, Aryl, Alkyl, Aryloxy, Alkyloxy, Halogen, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, mEthoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl bedeutet beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rest oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes C₆-C₁₄-Aryl bedeutet beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, lsopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes C₅-C₁₂-Cycloalkyl bedeutet beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein durch die entsprechenden Gruppen gegebenenfalls substituierter fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Dimethylpyridyl, Methylchinolyl, Dimethylpyryl, Methoxyfuryl, Dimethoxypyridyl, Difluorpyridyl, Methylthiophenyl, Isopropylthiophenyl oder tert.-Butylthiophenyl.

Bevorzugt sind R¹, R², R³, R⁴, R⁵ und R⁶ unabhängig voneinander Wasserstoff, Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Dimethylamino, Diethylamino und Chlor.

Besonders bevorzugte Pyridine (la) sind solche, bei denen einer der Reste R¹ bis R⁵ Methyl, Ethyl oder Chlor ist und alle anderen Wasserstoff sind, oder R³ Dimethylamino und alle anderen Wasserstoff sind, oder alle Wasserstoff sind, oder R² Carboxy oder Carboxamid und alle anderen Wasserstoff, oder R¹ und R² oder R² und R³ 1,4-Buta-1,3-dienylen und alle anderen Wasserstoff sind.

Besonders bevorzugte Pyridazine (Ib) sind solche, bei denen einer der Reste R¹ bis R⁴ Methyl oder Ethyl und alle anderen Wasserstoff oder alle Wasserstoff sind.

Besonders bevorzugte Pyrimidine (Ic) sind solche, bei denen R² bis R⁴ Wasserstoff oder Methyl und R¹ Wasserstoff, Methyl oder Ethyl ist, oder R² und R⁴ Methyl, R³ Wasserstoff und R¹ Wasserstoff, Methyl oder Ethyl ist.

Besonders bevorzugte Pyrazine (Id) sind solche, bei denen R¹ bis R⁴ alle Methyl oder alle Wasserstoff sind.

Besonders bevorzugte Imidazole (Ie) sind solche, bei denen unabhängig voneinander R¹ ausgewählt ist unter Methyl, Ethyl, n-Propyl, n-Butyl, n-Pentyl, n-Octyl, 2-Hydroxyethyl oder 2-Cyanoethyl und R² bis R⁴ unabhängig voneinander Wasserstoff, Methyl oder Ethyl bedeuten.

Besonders bevorzugte 1H-Pyrazole (If) sind solche, bei denen unabhängig voneinander R¹ unter Wasserstoff, Methyl oder Ethyl, R², R³ und R⁴ unter Wasserstoff oder Methyl ausgewählt sind.

Besonders bevorzugte 3H-Pyrazole (Ig) sind solche, bei denen unabhängig voneinander R¹ unter Wasserstoff, Methyl oder Ethyl, R², R³ und R⁴ unter Wasserstoff oder Methyl ausgewählt sind.

Besonders bevorzugte 4H-Pyrazole (Ih) sind solche, bei denen unabhängig voneinander R¹ bis R⁴ unter Wasserstoff oder Methyl, ausgewählt sind.

Besonders bevorzugte 1-Pyrazoline (Ii) sind solche, bei denen unabhängig voneinander R¹ bis R⁶ unter Wasserstoff oder Methyl ausgewählt sind.

Besonders bevorzugte 2-Pyrazoline (Ij) sind solche, bei denen unabhängig voneinander R¹ unter Wasserstoff, Methyl, Ethyl oder Phenyl und R² bis R⁶ unter Wasserstoff oder Methyl ausgewählt sind.

Besonders bevorzugte 3-Pyrazoline (Ik) sind solche, bei denen unabhängig voneinander R¹ oder R² unter Wasserstoff, Methyl, Ethyl oder Phenyl und R³ bis R⁶ unter Wasserstoff oder Methyl ausgewählt sind.

Besonders bevorzugte Imidazoline (II) sind solche, bei denen unabhängig voneinander R¹ oder R² unter Wasserstoff, Methyl, Ethyl, n-Butyl oder Phenyl und R³ oder R⁴ unter Wasserstoff, Methyl oder Ethyl und R⁵ oder R⁶ unter Wasserstoff oder Methyl ausgewählt sind.

Besonders bevorzugte Imidazoline (Im) sind solche, bei denen unabhängig voneinander R¹ oder R² unter Wasserstoff, Methyl oder Ethyl und R³ bis R⁶ unter Wasserstoff oder Methyl ausgewählt sind.

Besonders bevorzugte Imidazoline (In) sind solche, bei denen unabhängig voneinander R¹, R² oder R³ unter Wasserstoff, Methyl oder Ethyl und R⁴ bis R⁶ unter Wasserstoff oder Methyl ausgewählt sind.

Besonders bevorzugte Thiazole (Io) oder Oxazole (Ip) sind solche, bei denen unabhängig voneinander R¹ unter Wasserstoff, Methyl, Ethyl oder Phenyl und R² oder R³ unter Wasserstoff oder Methyl ausgewählt sind.

Besonders bevorzugte 1,2,4-Triazole (Iq) sind solche, bei denen unabhängig voneinander R¹ oder R² unter Wasserstoff, Methyl, Ethyl oder Phenyl und R³ unter Wasserstoff, Methyl oder Phenyl ausgewählt sind.

Besonders bevorzugte 1,2,3-Triazole (Ir) sind solche, bei denen unabhängig voneinander R¹ unter Wasserstoff, Methyl oder Ethyl und R² oder R³ unter Wasserstoff oder Methyl ausgewählt sind oder R² und R³ 1,4-Buta-1,3-dienylen und alle anderen Wasserstoff sind.

Unter den vorstehend genannten Heterocyclen sind die Pyridine und die Imidazole bevorzugt.

Ganz besonders bevorzugte Verbindungen zur Bildung des Kations sind 3-Chlorpyridin, 4-Dimethylaminopyridin, 2-Ethyl-4-aminopyridin, 2-Methylpyridin, 2-Ethylpyridin, 2-Ethyl-6-methylpyridin, Chinolin, Isochinolin, Pyridin, 1-C₁-C₄-Alkylimidazol, 1-Methylimidazol, 1,2-Dimethylimidazol, 1-n-Butylimidazol, 1,4,5-Trimethylimidazol, 1,4-Diemethylimidazol, Imidazol, 2-Methylimidazol, 1-Butyl-2-methylimidazol, 4-Methylimidazol, 1-n-Pentylimidazol, 1-n-Hexylimidazol, 1-n-Octylimidazol, 1-(2'-Aminoethyl)-imidazol, 2-Ethyl-4-methylimidazol, 1-Vinylimidazol, 2-Ethylimidazol, 1-(2'-Cyanoethyl)imidazol und Benzotriazol. Insbesondere bevorzugt sind 1-n-Butylimidazol, 1-Methylimidazol, 2-Methylpyridin und 2-Ethylpyridin.

Weiterhin geeignet sind tertiäre Amine der Formel (II)

NR^{a}R^{b}R^{c} (II)

R^{a}, R^{b} und R^{c} bedeuten unabhängig voneinander jeweils C₁-C₁₈-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl oder C₅-C₁₂-Cycloalkyl oder einen fünf- bis sechsgliedrigen, Sauerstoff-, Stickstoff- und/oder Schwefelatome aufweisenden Heterocyclus oder zwei davon, die gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können, mit der Maßgabe, dass mindestens zwei der drei Reste R^{a}, R^{b} und R^{c} unterschiedlich sind und die Reste R^{a}, R^{b} und R^{c} zusammen mindestens 8, bevorzugt mindestens 10, besonders bevorzugt mindestens 12 und ganz besonders bevorzugt mindestens 13 Kohlenstoffatome aufweisen.

Bevorzugt sind R^{a}, R^{b} und R^{c} unabhängig voneinander jeweils C₁-C₁₈-Alkyl, C₆-C₁₂-Aryl oder C₅-C₁₂-Cycloalkyl und besonders bevorzugt C₁-C₁₈-Alkyl, wobei die genannten Reste jeweils durch funktionelle Gruppen, Aryl, Alkyl, Aryloxy, Alkyloxy, Halogen, Heteroatome und/oder Heterocyclen substituiert sein können.

Beispiele für die jeweiligen Gruppen sind bereits oben aufgeführt.

Bevorzugt sind die Reste R^{a}, R^{b} und R^{c} Methyl, Ethyl, n-Propyl, Isopropyl, n-Butyl, sec-Butyl, tert.Butyl, n-Pentyl (n-Amyl), 2-Pentyl (sek-Amyl), 3-Pentyl, 2,2-Dimethyl-prop-1-yl (neo-Pentyl), n-Hexyl, n-Heptyl, n-Octyl, iso-Octyl, 2-Ethylhexyl, 1,1-Dimethylpropyl, 1,1-Dimethylbutyl, Benzyl, 1-Phenylethyl, 2-Phenylethyl, α,α-Dimethylbenzyl, Phenyl, Tolyl, Xylyl, α-Naphthyl, β-Naphthyl, Cyclopentyl oder Cyclohexyl.

Bilden zwei Reste R^{a}, R^{b} und R^{c} eine Kette, so kann dies beispielsweise 1,4-Butylen oder 1,5-Pentylen sein.

Beispiele für die tertiären Amine der Formel (II) sind Diethyl-n-butylamin, Diethyl-tert-butylamin, Diethyl-n-pentylamin, Diethyl-hexylamin, Diethyl-octylamin, Diethyl-(2-ethylhexyl)-amin, Di-n-propyl-butylamin, Di-n-propyl-n-pentylamin, Di-n-propylhexylamin, Di-n-propyl-octylamin, Di-n-propyl-(2-ethylhexyl)-amin, Di-iso-propyl-ethylamin, Di-iso-propyl-n-propylamin, Di-iso-propyl-butylamin, Di-iso-propylpentylamin, Di-iso-propyl-hexylamin, Di-iso-propyl-octylamin, Di-iso-propyl-(2-ethylhexyl)-amin, Di-n-butyl-ethylamin, Di-n-butyl-n-propylamin, Di-n-butyl-n-pentylamin, Di-n-butyl-hexylamin, Di-n-butyl-octylamin, Di-n-butyl-(2-ethylhexyl)-amin, N-n-Butyl-pyrrolidin, N-sek-Butyl-pyrrodidin, N-tert-Butyl-pyrrolidin, N-n-Pentylpyrrolidin, N,N-Dimethylcyclohexylamin, N,N-Diethylcyclohexylamin, N,N-Di-n-butylcyclohexylamin, N-n-Propyl-piperidin, N-iso-Propylpiperidin, N-n-Butyl-piperidin, N-sek-Butyl-piperidin, N-tert-Butyl-piperidin, N-n-Pentyl-piperidin, N-n-Butylmorpholin, N-sek-Butylmorpholin, N-tert-Butylmorpholin, N-n-Pentylmorpholin, N-Benzyl-N-ethylanilin, N-Benzyl-N-n-propyl-anilin, N-Benzyl-N-iso-propyl-anilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-propylphenylamin und Di-n-butylphenylamin.

Bevorzugte tertiäre Amine (II) sind Di-iso-propyl-ethylamin, Diethyl-tert-butylamin, Di-iso-propyl-butylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren.

Ein tertiäres Amin, das ebenfalls bevorzugt und erfindungsgemäß einsetzbar ist, jedoch im Gegensatz zu den oben angeführten drei identische Reste aufweist, ist Triallylamin.

Anionen [Y]ⁿ⁻ der ionischen Flüssigkeit sind beispielsweise Fluorid, Chlorid, Bromid, Jodid, Nitrat, Nitrit, Carbonat, Hydrogencarbonat, Sulfat, Hydrogensulfat, Sulfit, Hydrogensulfit, Phosphat, Hydrogenphosphat, Dihydrogenphosphat, Borat, Hydrogenborat, Dihydrogenborat, Tetrafluoroborat, Tetrachloroborat, Hexafluorophosphat, Hexafluoro-Antimonat, Hexafluoroarsenat, Fluorosulfonat, Dichlorocuprat, Trichlorozinkat, Aluminiumtetrabromid sowie Aluminiumchloride (AlCl₄⁻ , Al₂Cl₇⁻, Al₃Cl₁₀⁻).

Weiterhin sind Anionen bevorzugt, die ausgewählt sind aus

R¹-COO⁻, R¹-OCOO⁻, R¹-SO₃⁻ , R¹-OSO3⁻, R¹-PO₄²⁻, R¹-R²-PO₄⁻ , R¹-BO₃²⁻ , R¹-R²-BO₃⁻, B(OR¹)(OR²)(OR³)(OR⁴)⁻ , (R¹-SO₂)₂N⁻ .

Darin bedeuten R¹, R², R³ und R⁴ unabhängig voneinander jeweils Wasserstoff, C₁-C₁₈-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin bedeutet gegebenenfalls durch funktionelle Gruppen, Aryl, Alkyl, Aryloxy, Alkyloxy, Halogen, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, mEthoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl bedeutet beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rest oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes C₆-C₁₄-Aryl bedeutet beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes C₅-C₁₂-Cycloalkyl bedeutet beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

In der ionischen Flüssigkeit liegen Kationen sowie Anionen vor. Innerhalb der ionischen Flüssigkeit wird vom Kation ein Proton oder ein Alkylrest an das Anion übertragen. Hierdurch entstehen zwei neutrale Moleküle. Hierbei entsteht ein Gleichgewicht, in welchem Anionen, Kationen und die zwei neutralen Moleküle vorliegen.

Die im Gleichgewicht in der ionischen Flüssigkeit vorliegenden neutralen Moleküle können aus der ionischen Flüssigkeit abdestilliert werden. Hierdurch wird das Gleichgewicht innerhalb der ionischen Flüssigkeit beeinflusst. Dadurch werden erneut Anionen durch die Kationen protoniert bzw. alkyliert, um das Gleichgewicht wieder einzustellen. Dieser Mechanismus führt dazu, dass sich die ionische Flüssigkeit destillieren lässt.

In einer bevorzugten Ausführungsform werden die abdestillierten Moleküle kondensiert und in einer Vorlage gesammelt. Durch Erhitzen wird das Kondensat erneut zu einer ionischen Flüssigkeit umgesetzt.

Vorteilhafterweise ist die durch Destillation gewonnene ionische Flüssigkeit bzw. Flüssigkeitskomponente frei von Verunreinigungen.

Ist eines der abdestillierten Moleküle leichtflüchtig, so kann es sein, dass dieses nicht in der Vorlage kondensiert. Auf diese Weise kann gezielt nur eine der Komponenten zurückgewonnen werden. Dies kann durch eine geeignete Temperatursteuerung und/oder Drucksteuerung bei der Destillation bzw. der Kondensation in der Vorlage auch bewusst und gezielt gesteuert werden. Die so zurückgewonnene Komponente liegt ebenfalls in hoher Reinheit vor und kann später erneut zur Herstellung einer ionischen Flüssigkeit eingesetzt werden. Durch die Destillation der ionischen Flüssigkeiten wird ermöglicht, sie aufzureinigen bzw. zu recyclieren. Auch ist die Möglichkeit gegeben, die Komponenten des Anions oder des Kations aus der ionischen Flüssigkeit in ladungsmäßig neutraler Form wiederzugewinnen.

Bei der Destillation kleiner Mengen an ionischer Flüssigkeit erfolgt die Destillation vorzugsweise aus einem Glaskolben über eine Destillationsbrücke. Insbesondere eignet sich eine der typischen Destillationsapparaturen, wie sie dem Fachmann aus dem Labor bekannt ist.

Bei einer diskontinuierlichen Destillation kann die ionische Flüssigkeit in einer Destillierblase vorgelegt, in dieser auf Siedetemperatur aufgeheizt und teilweise verdampft werden. Die verdampfenden neutralen Moleküle aus der ionischen Flüssigkeit werden aus der Destillierblase abgezogen, in einem Kondensatorkühler kondensiert und gekühlt und in einer Destillatvorlage aufgefangen. In der Destillatvorlage können sich die abgetrennten Moleküle - soweit beide Komponentenarten übergehen - wieder zur ionischen Flüssigkeit vereinigen.

Zur kontinuierlichen Destillation einer ionischen Flüssigkeit wird sie vorzugsweise als Sumpf einer Destillationskolonne zugegeben. Die verdampfenden Komponenten werden vorzugsweise über den Kopf der Kolonne abgezogen. Anschließend werden die über den Kopf abgezogenen Komponenten vorzugsweise in einem Wärmetauscher kondensiert und vorzugsweise in einer Vorlage gesammelt.

Die zur Destillation der ionischen Flüssigkeiten eingesetzten Destilliereinrichtungen sind vorzugsweise derart ausgebildet, dass sie gegen die Umgebung abgedichtet sind, damit z. B. in der Destilliereinrichtung ein Vakuum erzeugt werden kann.

Die Beheizung des Sumpfes kann z.B. elektrisch oder durch ein Heizmedium erfolgen. Als Heizmedien eignen sich z.B. Dampf, Thermalöle oder Salzschmelzen.

### Beispiele

### Beispiel 1

### Destillation von EMIM Cl

Ein 250 ml Glaskolben wird mit der ionischen Flüssigkeit EMIM Cl gefüllt. Hierin ist EMIM eine Mischung aus 1-Methylimidazol und 1-Ethylimidazol. Über eine Destillationsbrücke destilliert die Flüssigkeit mit einer Übergangstemperatur von 59 °C bei einem Druck von 2,4 mbar vollständig ab. Die Sumpftemperatur beträgt dabei 215 °C. Das bei der Destillation entstehende Methylchlorid bzw. Ethylchlorid wird nicht kondensiert. Das Destillat wird mittels 1H NMR-Spektroskopie untersucht. Es enthält ausschließlich 1-Methylimidazol und 1-Ethylimidazol im Verhältnis 1:2,7.

### Beispiel 2

### Destillation von EMIM Diethylphosphat

62 g EMIM Diethylphosphat werden in eine Destillationsapparatur gefüllt. Bei einer Übergangstemperatur von 54 °C destilliert bei einem Druck von 0,2 mbar eine gelb- , orange Flüssigkeit ab. Die Sumpftemperatur bei der Destillation beträgt 223 °C. Die Untersuchung des Destillats mittels 1H NMR-Spektroskopie zeigt, dass das Destillat aus einer Mischung von 1-Methylimidazol, 1-methylimidazol sowie Triethylphosphat besteht.

### Beispiel 3

### Destillation von EMIM Diethylphosphat ohne Vakuum

In eine Destillationsapparatur werden 90 g EMIM Diethylphosphat gefüllt. Bei einer Sumpftemperatur von 254 °C und einer Übergangstemperatur von 78 °C destilliert ein farbloses Destillat ab.

### Beispiel 4 4

### Herstellung und Destillation von HMIM Cl

In einem Reaktionskolben werden 821,2 g (10 mol) 1-Methylimidazol vorgelegt. Dem 1-Methylimidazol werden 985,4 g (10 mol) 37%-ige wässrige HCl zugetropft, bis das Gemisch beginnt zu sieden. Bei einem Druck von 40 mbar und 37 °C werden zunächst 65,6 g Wasser abdestilliert. Anschließend wird bei einem Druck von 0,2-0,5 mbar, einer Sumpftemperatur von 200°C und einer Übergangstemperatur von 145 °C bis 159 °C 1032 g einer Flüssigkeit abdestilliert, die nach dem Erkalten zu einem farblosen Feststoff erstarrt. Die Untersuchung des Feststoffes mittels 1H NMR-Spektroskopie zeigt, dass es sich bei dem Feststoff um reines HMIM Cl (Methylimidazolchlorid) handelt. Eine Elementaranalyse des Destillates zeigt, dass das Destillat 29,5 % Chlorid enthält.

### Beispiel 5

### Herstellung, Destillation und Rekombination von MMIM Dimethylphosphat

In 41,1 g (0,5 mol) N-Methylimidazol werden bei 85°C innerhalb 1 Stunde 70,0 g (0,5 mol) Trimethylphosphat zugetropft. Durch die exotherme Reaktion steigt die Temperatur auf 102°C an. Man rührt weitere 3 Stunden bei 95°C nach. Es werden 111 g der ionischen Flüssigkeit MMIM Dimethylphosphat erhalten. Das ¹H NMR Spektrum (CDCl₃) zeigt die entsprechenden Signale bei 10,5 ppm (1H, N-CH-N), 7,6 ppm (2H, N-CH-CH-N), 4,0 ppm (6H, N-CH₃) und ein Duplett bei 3,6 ppm (6H, POCH₃).

Das MMIM Dimethylphosphat wurde bei 0,1 mbar Vakuum, 110 bis 196°C Sumpftemperatur und 23 bis 25°C Kopftemperatur abdestilliert. Es wurden 68,6 g Destillat erhalten, das im ¹H NMR Spektrum (CDCl₃) die Signale von freiem N-Methylimidazol 7,4 ppm (1H, N-CH-N), 7,0 ppm (1H, N-CH-CH-N), 6,9 ppm (1H, N-CH-CH-N), 3,7 ppm (3H, N-CH₃) und freiem Trimethylphosphat 3,8 ppm (9H, POCH₃) zeigt.

Das Destillat, das aus N-Methylimidazol und Trimethylphosphat besteht, wurde 5 Stunden bei 100°C und bei Normaldruck erhitzt. Das ¹H NMR Spektrum (CDCl₃) des erhaltenen Materials zeigte die Signale der ionischen Flüssigkeit MMIM Dimethylphosphat bei 10,3 ppm (1H, N-CH-N), 7,7 ppm (2H, N-CH-CH-N), 4,0 ppm (6H. N-CH₃) und das Duplett bei 3,6 ppm (6H, POCH₃).

## Patentansprüche

1. Verfahren zur Destillation ionischer Flüssigkeiten, welches folgende Schritte umfasst:
A Einstellen eines Drucks, der gleich dem Umgebungsdruck oder niedriger als der Umgebungsdruck ist,
B Erwärmen auf eine Temperatur im Bereich von 60°C bis 350°C

2. Verfahren nach Anspruch 1, **dadurch gekennzeichnet, dass** in der ionischen Flüssigkeit Kationen, Anionen und neutrale Moleküle, die insbesondere durch Protonierung bzw. Alkylierung der Anionen durch die Kationen entstehen, im Gleichgewicht vorliegen.

3. Verfahren nach Anspruch 1 oder 2, **dadurch gekennzeichnet, dass** bei der Destillation zumindest das leichterflüchtige der neutralen Moleküle abdestilliert wird.

4. Verfahren nach einem der Ansprüche 1 bis 3, **dadurch gekennzeichnet, dass** der Druck < 200 mbar ist.

5. Verfahren nach einem der Ansprüche 1 bis 4, **dadurch gekennzeichnet, dass** der Druck < 50 mbar ist.

6. Verfahren nach einem der Ansprüche 1 bis 5, **dadurch gekennzeichnet, dass** der Druck < 5 mbar ist.

7. Verfahren nach einem der Ansprüche 1 bis 6, **dadurch gekennzeichnet, dass** die Temperatur im Bereich von 100 °C bis 350 °C liegt.

8. Verfahren nach einem der Ansprüche 1 bis 7, **dadurch gekennzeichnet, dass** die Temperatur im Bereich 150 bis 350 °C liegt.

9. Verfahren nach einem der Ansprüche 1 bis 8, **dadurch gekennzeichnet, dass** beide neutralen Moleküle durch Destillation abgetrennt werden.

10. Verfahren nach einem der Ansprüche 1 bis 9, **dadurch gekennzeichnet, dass** die abdestillierten neutralen Moleküle erneut zu einer ionischen Flüssigkeit rekombiniert werden.

11. Verfahren nach einem der Ansprüche 1 bis 8, **dadurch gekennzeichnet, dass** eines der beiden destillativ abgetrennten neutralen Moleküle zur erneuten Herstellung einer andersartigen ionischen Flüssigkeit genutzt wird oder dass nur das leichterflüchtige dazu genutzt wird.

12. Verwendung des Verfahrens nach einem der Ansprüche 1 bis 11 zur Reinigung ionischer Flüssigkeiten.

13. Verwendung des Verfahrens nach einem der Ansprüche 1 bis 11 zur Rückführung von ionischen Flüssigkeiten.

## Claims

1. A process for the distillation of ionic liquids, which comprises the following steps:
A setting a pressure which is not higher than ambient pressure,
B heating to a temperature in the range from 60°C to 350°C.

2. The process according to claim 1, wherein cations, anions and uncharged molecules which are formed, in particular, by protonation or alkylation of the anions by the cations are present in equilibrium in the ionic liquid.

3. The process according to claim 1 or 2, wherein at least the more volatile of the uncharged molecules is distilled off in the distillation.

4. The process according to any of claims 1 to 3, wherein the pressure is < 200 mbar.

5. The process according to any of claims 1 to 4, wherein the pressure is < 50 mbar.

6. The process according to any of claims 1 to 5, wherein the pressure is < 5 mbar.

7. The process according to any of claims 1 to 6, wherein the temperature is in the range from 100°C to 350°C.

8. The process according to any of claims 1 to 7, wherein the temperature is in the range from 150 to 350°C.

9. The process according to any of claims 1 to 8, wherein both uncharged molecules are separated off by distillation.

10. The process according to any of claims 1 to 9, wherein the uncharged molecules which have been distilled off are recombined again to form an ionic liquid.

11. The process according to any of claims 1 to 8, wherein either of the two uncharged molecules which have been separated off by distillation is utilized again to prepare a different type of ionic liquid or only the more volatile uncharged molecule is utilized for this purpose.

12. The use of the process according to any of claims 1 to 11 for the purification of ionic liquids.

13. The use of the process according to any of claims 1 to 11 for the recirculation of ionic liquids.

## Revendications

1. Procédé pour la distillation de liquides ioniques, qui comprend les étapes suivantes :
A. ajustement d'une pression qui est égale à la pression environnante ou inférieure à la pression environnante,
B chauffage à une température dans la plage de 60 °C à 350 °C.

2. Procédé selon la revendication 1, **caractérisé en ce que** dans le liquide ionique sont présents des cations, des anions et des molécules neutres qui résultent en particulier de la protonation ou de l'alkylation des anions par les cations.

3. Procédé selon la revendication 1 ou 2, **caractérisé en ce que** dans la distillation au moins la plus volatile des molécules neutres est éliminée par distillation.

4. Procédé selon l'une quelconque des revendications 1 à 3, **caractérisé en ce que** la pression est < 200 mbars.

5. Procédé selon l'une quelconque des revendications 1 à 4, **caractérisé en ce que** la pression est < 50 mbars.

6. Procédé selon l'une quelconque des revendications 1 à 5, **caractérisé en ce que** la pression est < 5 mbars.

7. Procédé selon l'une quelconque des revendications 1 à 6, **caractérisé en ce que** la température se situe dans la plage de 100 °C à 350 °C.

8. Procédé selon l'une quelconque des revendications 1 à 7, **caractérisé en ce que** la température se situe dans la plage de 150 °C à 300°C.

9. Procédé selon l'une quelconque des revendications 1 à 8, **caractérisé en ce que** les deux molécules neutres sont séparées par distillation.

10. Procédé selon l'une quelconque des revendications 1 à 9, **caractérisé en ce que** les molécules neutres séparées par distillation sont de nouveau recombinées en un liquide ionique.

11. Procédé selon l'une quelconque des revendications 1 à 8, **caractérisé en ce que** l'une des deux molécules neutres séparées par distillation est utilisée pour la production renouvelée d'un autre liquide ionique ou **en ce que** seule la plus volatile est utilisée à cette fin.

12. Utilisation du procédé selon l'une quelconque des revendications 1 à 11 pour la purification de liquides ioniques.

13. Utilisation du procédé selon l'une quelconque des revendications 1 à 11 pour le recyclage de liquides ioniques.
